# EUROPEAN PATENT APPLICATION

(11) **EP 3 273 130 A1**
(43) Date of publication of application: **24.01.2018**
(21) Application number: 16180342.4
(22) Date of filing: 20.07.2016
(51) Int. Cl.: F16L 15/04

(54) **THREADED INSERT FOR TUBE ATTACHMENTS AND FITTINGS FOR CONDUCTING LIQUID AND GASEOUS FLUIDS IN GENERAL**

(71) Applicant: Olmedo, Ramiro Gabriel, Buenos Aires (AR); Pesculich, Juan Pablo, Buenos Aires (AR); de Luque, Alejandro, Buenos Aires (AR)
(72) Inventor: Olmedo, Ramiro Gabriel, Buenos Aires (AR); Pesculich, Juan Pablo, Buenos Aires (AR); de Luque, Alejandro, Buenos Aires (AR)
(74) Representative: Mediano Cortés, Santiago David

(57) **Abstract**

The invention relates to a threaded insert for tube attachments and fittings for conducting liquid and gaseous fluids in general, intended for male/female pipe connections of the type which are attached from one of their ends by thermal fusion, cold welding, with a rubber ring, among other possible forms of attachment, which allows preventing leakages through the male/female connection of the attached parts. Said insert consists of a metal tubular body having a first male segment (2) that can be snugly coupled to the end of a tube or of a connection fitting, and a second male segment (3) having an outer covering (4) made of an elastomeric material defining a sealing thread between the parts to be attached. The first male segment has a cross section greater than the diameter of the second male segment, thereby forming a step between both segments. Preferably, the elastomeric material is PTFE (polytetrafluoroethylene), although other materials efficiently performing the sealing function can also be used in practice.

## Description

### TECHNICAL FIELD

The present invention relates to a threaded insert for tube attachments and fittings for conducting liquid and gaseous fluids in general, and more particularly a metal insert that can be incorporated in tubes and/or fittings of the type attached by thermal fusion, cold welding, with a rubber ring, among other possible forms of attachment, this insert allowing assuring the sealing and leak-tightness of the corresponding connections.

### PRIOR ART

One of the main conditions or properties that pipes for conducting fluids must meet is the leak-tightness of the connections both between successive tube ends and between the tubes and fittings of the corresponding installation, such that risks of leakages or fluid losses are prevented. Although leak-tight attachments are a required condition in all types of pipe installations for conducting fluids, they become essentially significant when the fluids to be conducted are, for example, combustible and/or toxic liquid and gaseous fluids, because in the event of fluid leakages, in addition to the technical drawbacks caused by this situation, there are risks of accidents of a diverse nature due to the combustion of the fluids and/or intoxication of the people who are in the proximities of the leakage or in the environment where the leakage occurred. The drawbacks of fluid leakages, and particularly work for repairing defective attachments, are even greater when the pipes are embedded in walls and stonework in general, given that in some cases it is usually hard to precisely locate the point where the leakage occurs and, as a result, part of the material covering the pipes must be torn down until the defective attachment is located and repaired.

The prior art in the subject matter discloses various systems and methods for sealing tube attachments and fittings, both for attachments between smooth and threaded connection ends. In both cases, when the tubes and fittings are made of a polymeric material or the combination of polymeric and metallic bodies, the safest and most common attachments are those made by thermal fusion of the thermoplastic material. Nevertheless, although methods for attachment by thermal fusion are generally effective, when the tubes and fittings are connected at first by means of at least one metal thread, such as, for example, a metal male thread and a female thread formed in the polymeric hot melt material, it is suitable to complete the attachment by means of a seal which assures their leak-tightness and, therefore, reduce the risks of fluid leakages as much as possible. To that end, different ways of sealing the attachments such as those disclosed by patent documents US 09/352431 of Nylok Fastener Corporation, AR036363A1 of Formar S.A. and US 10/700484 of Tenaris Connections A.G., among others, have been developed.

Patent document US 09/352431 describes a process for the application of a fluoropolymer coating in a threaded attachment and, particularly, all of the threads of the attachment. The fluoropolymer is supplied in powder form to a spray nozzle where it is discharged at room temperature onto the selected area of the attachment, and it then heats up to a temperature above the melting point of the fluoropolymer to melt the powder and form a continuous film coating which adheres, upon cooling, to the area of the attachment.

Patent document AR036363A1 discloses a seal for threaded attachments of pipelines which are formed with outer threads attached by couplings with inner threads which is constituted by a cylindrical sleeve made of an elastomeric material, this seal preferably being used in pipelines carrying corroding fluids, hydrocarbons and their derivatives, and the like.

Patent document US 10/700484 describes a high-strength sealed connection for radially expandable pipes for use in oil and gas wells, having a pair of tubular elements with a thread at a free end and coupled to one another to form the connection, and a sealing substance applied on both elements which, after radial expansion, keep the sealing substance adhered between the threads thereof.

With respect to the attachments and ways of sealing the attachments according to the patent documents mentioned above as typical examples of the prior art, it must be mentioned that both said attachments and other existing ones, in general, have been specially developed for specific applications where the pipes must comply with strict industrial safety controls and regulations, as required in the field of hydrocarbon extractions and in other installations operating under certain conditions which put the pipe structure and, especially, the corresponding attachments, under extreme stress. In other words, such attachments are not intended for general purpose installations where safety requirements, while they must duly comply with the safety regulations in force, are less restrictive since the pipes are not subjected to critical conditions. Therefore, it is suitable to have attachment elements for pipes which, although being formed by simple structures, allow making quick and safe connections and, furthermore, have a manufacturing cost and selling price that are considerably low with respect to attachments such as those mentioned above.

### DISCLOSURE OF THE INVENTION

The proposed insert solves in a completely satisfactory manner the drawbacks described above based on a simple but has highly effective solution.

The object of the present invention is to provide a threaded insert for tube attachments and fittings for conducting liquid and gaseous fluids in general, intended for male/female pipe connections of the type which are attached from one of their ends by thermal fusion, cold welding, with a rubber ring, among other possible forms of attachment, which allow preventing leakages through the male/female connection of the attached parts, which consists of a metal tubular body having a first male segment that can be snugly coupled to the end of a tube or of a connection fitting, and a second male segment having an outer covering made of an elastomeric material defining a sealing thread between the parts to be attached.

The first male segment has a cross section greater than the diameter of the second male segment, thereby forming a step between both segments. The elastomeric material is preferably PTFE (polytetrafluoroethylene), although other materials efficiently performing the sealing function can also be used in practice.

### BRIEF DESCRIPTION OF THE DRAWINGS

To complement the description that will be made below and for the purpose of aiding to better understand the features of the invention according to a preferred practical embodiment thereof, a set of drawings is attached as an integral part of said description in which the following has been depicted in an illustrative and non-limiting manner:
Figure 1 shows a perspective view of a threaded insert for tube attachments and fittings for conducting liquid and gaseous fluids in general made according to the object of the present invention.
Figures 2A and 2B are longitudinal section views of the insert according to two possible ways of carrying it out to practice.
Figure 3 finally shows a perspective view, as an application example, of the insert arranged in an "elbow"-type connection fitting.

### DETAILED DISCLOSURE OF THE INVENTION

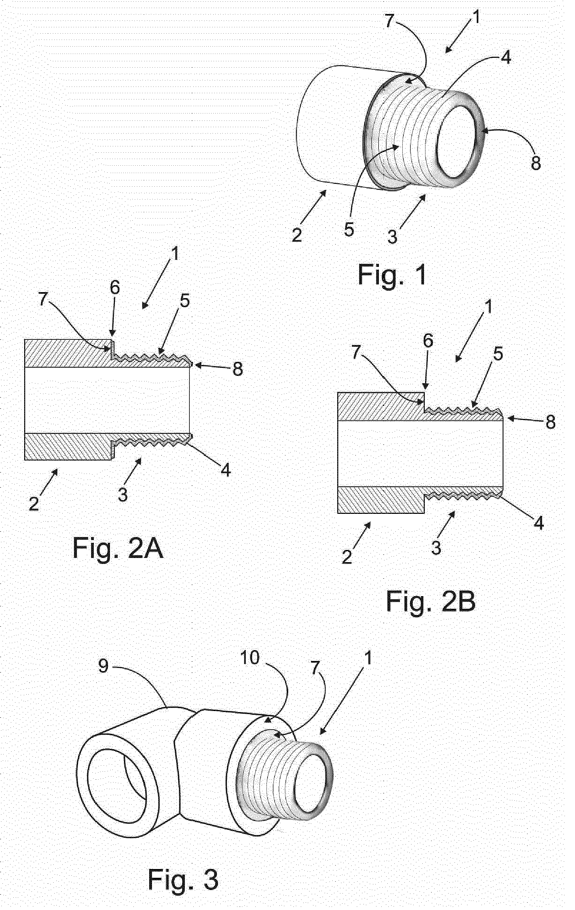

Figures 1 and 2 show that the insert object of the present invention, indicated with general reference number (1), is a tubular body having a first male segment (2) from which it is snugly coupled to the end of a tube or of a connection fitting, and a second male segment (3) covered by an elastomeric polymer layer (4) in which an outer thread (5) is formed. Said polymer layer defines the element sealing the attachment between the parts to be connected.

The first male segment (2) of the insert has a diameter greater than the second male segment (3), and an annular step (6) is thus formed; said annular step (6) having a front face (7) which is aligned with the plane of the front wall of the end of the corresponding tube or fitting once the insert is placed in the tube or in the fitting. The polymer layer (4) preferably extends covering the front face (7) of said step (6) and the front face (8) of the male segment (3) of the insert (1).

The application example of Figure 3 shows the insert (1) placed in a connection fitting (9), clearly depicting the coincidence between the front face (7) of the step (6), formed by the difference in diameters between the segments (2) and (3) of the insert 1, and the front face (10) of the tubular portion of said fitting (9) in which the insert is placed.

In practice, the elastomeric polymer used in the layer (4) is thermoplastic, and preferably PTFE (polytetrafluoroethylene) since it has many properties suitable for the purpose of the insert as it is practically inert, does not react with other chemical substances except in very special situations, has a very low coefficient of friction and high impermeability, is electrically insulating, highly flexible, not affected by the action of light, and is resistant to extreme temperatures. Furthermore, the possibility of forming the polymer layer as a paint bath reaching a sufficient thickness to assure its attachment sealing function is envisaged. Likewise, the sealing element defined by the layer (4) can be a cover which subsequently requires a curing treatment, as well as an electrolytic bath or a bath of similar characteristics. Regardless of the material used, the layer (4) can be made on the insert (1) partially or completely.

The main body of the insert, i.e., segment (2) and segment (3) without layer (4), are in turn formed by a single metal part, and the material to be used can be, for example, brass, copper, iron, stainless steel, among other possible materials.

## Claims

1. A threaded insert for tube attachments and fittings for conducting liquid and gaseous fluids in general, intended for male/female pipe connections of the type which are attached from one of their ends by thermal fusion, cold welding, with a rubber ring, among other possible forms of attachment, **characterized in that** the insert consists of a tubular body having a first male segment (2) that can be snugly coupled to the end of a tube or of a connection fitting, and a second male segment (3) having a covering (4) made of an elastomeric material defining a sealing thread for sealing the attachment between the corresponding parts.

2. The threaded insert for tube attachments and fittings for conducting liquid and gaseous fluids in general according to claim 1, **characterized in that** said elastomeric material is PTFE (polytetrafluoroethylene).

3. The threaded insert for tube attachments and fittings for conducting liquid and gaseous fluids in general according to claim 1, **characterized in that** said elastomeric material is thermoplastic.

4. The threaded insert for tube attachments and fittings for conducting liquid and gaseous fluids in general according to claim 2 or 3, **characterized in that** said covering made of an elastomeric material is arranged in the form of a wrap-around band along the length said second segment of the tubular body.

5. The threaded insert for tube attachments and fittings for conducting liquid and gaseous fluids in general according to claim 1, **characterized in that** said elastomeric material is made with a paint bath.

6. The threaded insert for tube attachments and fittings for conducting liquid and gaseous fluids in general according to claims 1 to 5, **characterized in that** said first and second segments of the insert are formed by a metal part.

7. The threaded insert for tube attachments and fittings for conducting liquid and gaseous fluids in general according to claim 6, **characterized in that** the material of said metal part is selected from brass, copper, iron, stainless steel and zinc.

8. The threaded insert for tube attachments and fittings for conducting liquid and gaseous fluids in general according to claims 1 to 7, **characterized in that** the first male segment has a cross section greater than the diameter of the second male segment, thereby forming a step between both segments, the elastomeric material being provided such that it extends covering the front face of the step which is defined between said first segment of the insert and the front face of said second segment.
